# EUROPÄISCHE PATENTSCHRIFT

(11) **EP 3 837 201 B1**
(45) Veröffentlichungstag und Bekanntmachung des Hinweises auf die Patenterteilung: **30.08.2023**
(21) Anmeldenummer: 19719887.2
(22) Anmeldetag: 26.04.2019
(51) Int. Cl.: B65H 18/20, F16C 27/04, F16C 13/02, B65H 18/02

(54) **AUFWICKELVORRICHTUNG**
TAKE-UP APPARATUS
DISPOSITIF D'ENROULEMENT

(30) Priorität: 14.08.2018 DE 102018119740
(43) Veröffentlichungstag der Anmeldung: 23.06.2021
(73) Patentinhaber: Voith Patent GmbH, 89522 Heidenheim (DE)
(72) Erfinder: VAN HAAG, Rolf, 47647 Kerken (DE)
(74) Vertreter: Voith Patent GmbH - Patentabteilung
(86) Internationale Anmeldenummer: PCT/EP2019/060722
(87) Internationale Veröffentlichungsnummer: WO 2020/035176

(56) Entgegenhaltungen:
- WO-A1-2014/000799
- DE-A1- 2 225 360
- DE-A1-102011 006 158
- GB-A- 2 216 609

## Beschreibung

Die Erfindung betrifft eine Vorrichtung zum Aufwickeln einer Materialbahn zu einer Wickelrolle mit mindestens einer Walze, an der die Wickelrolle beim Wickeln anliegt und die beim Wickeln rotiert, wobei die Walze in einer Lagereinrichtung mit einem Lager an jedem Walzenende gelagert ist und das Lager eine hydrostatische Abstützung mit mindestens einer Lagertasche aufweist, die mit Hydraulikflüssigkeit gespeist ist.

Die Erfindung wird im Folgenden anhand einer Papierbahn als Beispiel für eine Materialbahn beschrieben. Sie ist aber auch bei anderen Materialbahnen anwendbar, bei denen ähnliche Probleme auftreten. Vorrichtungen zum Aufwickeln von Papierbahnen erreichen hohe Arbeitsbreiten von mehr als 10 m. Die auf ihnen hergestellten Wickelrollen können im Falle längs geteilter Bahnen dabei einen Enddurchmesser von 1,6 m und mehr erreichen. Im Falle ungeteilter Bahnen können die Enddurchmesser 3,5 m und mehr betragen.

Beim Aufwickeln von Papierbahnen kann man vielfach beobachten, dass die Wickelvorrichtung in Schwingungen gerät. Diese Schwingungen sind aus mehreren Gründen unerwünscht, zum einen erzeugen sie Geräusche. zum anderen verschlechtern sie die Qualität der erzeugten Wickelrolle. In kritischen Situationen können die Schwingungen so stark sein, dass sie zum Auswurf der Rolle aus der Wickelvorrichtung führen.

Man hat bislang versucht, diesem Problem dadurch entgegenzuwirken, dass man die erste Eigenfrequenz, also die niedrigste Eigenfrequenz, des Systems so hoch ansetzt, dass sie beim Betreiben der Wickelvorrichtung nicht erreicht wird.

Zusätzlich hat man versucht, das Auftreten von Schwingungen durch geeignete Dämpfer zu verringern.

Darüber hinaus wird in der DE 10 2011 006 158 A1 eine Lösung mit hydrostatischer Abstützung beschrieben, welche allerdings relativ viel Raum benötigt und aufwendig ist. Im Dokument WO2014/00799A1 wird eine Lösung zum kompakten Aufbau von einer schwingungsgedämpften Lagereinrichtung mit über den Umfang des Lagers verteilten Aussparungen beschrieben, welche in den Aussparungen Blattfedern vorteilhaft anordnet und die weiteren entstehenden radial verteilten Hohlräume vorteilhaft zur Schwingungsdämpfung nutzt.

Die Aufgabe der Erfindung ist es daher insbesondere den Raumbedarf zu vermindern und dadurch den Einsatz bei Umbauten zu ermöglichen.

Erfindungsgemäß wurde die Aufgabe dadurch gelöst, dass sich die Lagertasche senkrecht zur Walzenachse betrachtet vorzugsweise in Form eines Kreisbogens, insbesondere zylinderförmig gekrümmt um einen Teilabschnitt des jeweiligen zylindrischen Walzenendes erstreckt.

Durch die gekrümmte Lagertasche kann die Lagereinrichtung nicht nur kompakter gestaltet, sondern auch bezüglich der Ausrichtung der Standfläche unabhängiger eingesetzt werden. So ist auch eine Anordnung ohne Neigung zur Horizontale möglich. Im Interesse einer umfassenden Schwingungsdämpfung sollte die Lagereinrichtung dabei mehrere Lagertaschen, vorzugsweise mit unterschiedlichen Wirkrichtungen aufweisen. Hierdurch ist es möglich, das Lager in mehrere Richtungen abzustützen.

Erfindungsgemäß hat die Lagereinrichtung nur zwei Lagertaschen, deren Wirkrichtungen sich mit einem Winkel zwischen 60 und 130° schneiden. Bei einem Winkel von vorzugsweise 90° entsteht ein Lager mit quasi isotropen Eigenschaften, dessen Steifigkeit und Dämpfung in allen relevanten Wirkrichtungen gleich sind. Aus diesem Grund arbeitet das Lager vom Anwickelvorgang bis zum Endwickeldurchmesser immer gleich.

Allgemein können die Lagertaschen bezüglich ihrer Dämpfungsparameter je nach Bedarf gleich oder unabhängig voneinander betrieben werden. Auch die Deaktivierung einzelner Lagertaschen ist möglich.

Des Weiteren kann eine Lagertasche auch in mehrere Teiltaschen unterteilt sein, von denen jede über eine Zuführdrossel gespeist wird. Mit dieser Ausgestaltung kann man ein Kippen des Lagers gegenüber den Lagertaschen verhindern.

Zur Vereinfachung der Konstruktion sollten die Lagertaschen identisch aufgebaut sein. Dementsprechend wird auch nicht mehr zwischen Lagertaschen mit und ohne Druckspeicher unterschieden.

In diesem Zusammenhang ist es ebenso vorteilhaft, wenn die Lagertaschen symmetrisch zu einer durch das Walzenende verlaufenden Symmetrieachse angeordnet sind.

Für einen einfachen und raumsparenden Aufbau sollten die Lagertasche zwischen dem Lagergehäuse der Lagereinrichtung und einem, das Lager umschließenden, feststehenden, zylinderringförmigen Lagerhalter angeordnet sein, wobei mit Vorteil das Lagergehäuse eine zylindrische Innenfläche besitzt, welche die zylindrische Außenfläche des zylinderringförmigen Lagerhalters umschließt.

Dabei kann die Lagertasche vorzugsweise von einer Aussparung im zylinderringförmigen Lagerhalter gebildet werden.

Die zylindrische Form erlaubt große Taschenflächen und verhindert ein ungewolltes Schwenken des Lagerhalters.

Bei einer hydrostatischen Abstützung ruht die Walze auf Hydraulikflüssigkeit, die fortlaufend durch einen Flüssigkeitsspalt strömt, der sich an der Begrenzung der Lagertasche ergibt. Unabhängig von der Last stellt sich im Mittel immer der gleiche Flüssigkeitsspalt an der Begrenzung der Lagertasche ein. Kurzzeitige bzw. schnelle Bewegungen, wie die einer Schwingbewegung, können jedoch aufgenommen werden. Eine beispielsweise elektronische Regelung der Walzenposition ist dabei nicht erforderlich.

Vorzugsweise wird die Lagertasche mit einem konstanten Volumenstrom von Hydraulikflüssigkeit gespeist. Wenn die Last vergrößert wird, dann verringert sich der Flüssigkeitsspalt etwas und der Drosselwiderstand für die Hydraulikflüssigkeit, die durch den Flüssigkeitsspalt abströmt, erhöht sich. Dadurch steigt der Druck in der Lagertasche, was der erhöhten Last entgegenwirkt. Damit ergibt sich sozusagen eine statische Positionsregelung. Ein konstanter Volumenstrom lässt sich relativ einfach, beispielsweise durch eine Konstantpumpe oder eine Pumpe mit einem Konstantstromregler bereitstellen.

Alternativ dazu kann die Lagertasche über eine Drossel mit einem konstanten Vordruck in Verbindung stehen. Der konstante Vordruck richtet sich nach der zu erwartenden Last und sollte wesentlich größer sein als ein durch diese Last erzeugter Gegendruck. Auch in diesem Fall ergibt sich eine automatische statische Positionsregelung. Wenn die Last steigt, vergrößert sich der Drosselwiderstand im Flüssigkeitsspalt. Dementsprechend kann weniger Hydraulikflüssigkeit aus der Lagertasche abfließen und der Druckabfall an der Drossel zwischen dem konstanten Vordruck und der Lagertasche wird entsprechend kleiner, so dass der Druck in der Lagertasche wieder ansteigt. Dieser ansteigende Druck wirkt der vergrößerten Last entgegen.

Beide Möglichkeiten machen sich zunutze, dass sich der Druck in der Lagertasche automatisch an die Belastungsverhältnisse anpasst. Diese Anpassung kann sehr schnell erfolgen, so dass die beim Wickeln auftretenden Schwingungen auch gut aufgenommen werden können. Im Mittel bleibt die Walze in der gewünschten Position. Die Lager können aber die Schwingung gut aufnehmen.

Ebenso kann die Lagertasche auch über eine Drossel mit einem Druckspeicher in Verbindung sein. Der Druckspeicher nimmt bei einer Schwingungsbewegung der Walze kurzzeitig die Flüssigkeit auf, die durch den Spalt am Rand der Lagertasche nicht abfließen kann, und gibt sie bei der entgegengesetzten Bewegung der Walze wieder ab. Dabei muss die Flüssigkeit jeweils durch die Drossel fließen, was eine Dämpfung bewirkt. Mit Hilfe der Drossel wird also Energie aus dem schwingenden System herausgenommen. Die Kombination aus hydrostatischer Abstützung und Druckspeicher mit Drossel bewirkt also eine klare Trennung der dynamischen und der statischen Eigenschaften des Lagers, so dass sich auf einfache Weise unterschiedliche Steifigkeiten für den statischen Zustand und für den dynamischen Zustand erreichen lassen.

Mit Vorteil weist die Drossel einen verstellbaren Drosselwiderstand auf. Damit lässt sich die Dämpfung einstellen. Man kann so auf einfache Weise Einfluss auf die dynamische Steifigkeit des Lagers nehmen, so dass die dynamische Steifigkeit so eingestellt werden kann, dass sich möglichst wenig Schwingungen ergeben.

Bevorzugt ist die Drossel mit einer von außen betätigbaren Stelleinrichtung verbunden.

Dementsprechend kann man die dynamische Steifigkeit auch noch dann verändern, wenn die Drossel im Innern des Lagers eingebaut ist. Dadurch ist es möglich, eine adaptive Dämpfung zu bewirken, d.h. man kann die dynamische Steifigkeit und die Dämpfung situationsbezogen einstellen.

Zwecks weiterer Vereinfachung sollte außerdem die Zu- und Abführung der Hydraulikflüssigkeit der Lagertasche insbesondere hydraulisch getrennt von der Lagerschmierung erfolgen. Dies erlaubt zudem eine optimale Wahl von Hydraulikflüssigkeit und Schmiermittel.

Außerdem ist es vorteilhaft, wenn die Lagergehäuse bezüglich der Abstützrichtung symmetrisch ausgebildet sind. Dies erlaubt es die mit der Wickelrolle in Kontakt kommenden Walzen der Wickelvorrichtung mit einheitlichen Lagereinrichtungen zu versehen.

Nachfolgend soll die Erfindung an einem Ausführungsbeispiel näher erläutert werden. In der beigefügten Zeichnung zeigt:
Figur 1: einen schematischen Querschnitt durch eine Wickelanordnung;
Figur 2: einen schematischen Querschnitt durch eine Lagereinrichtung 4 und
Figur 3: eine Ansicht eines Lagerhalters 8.

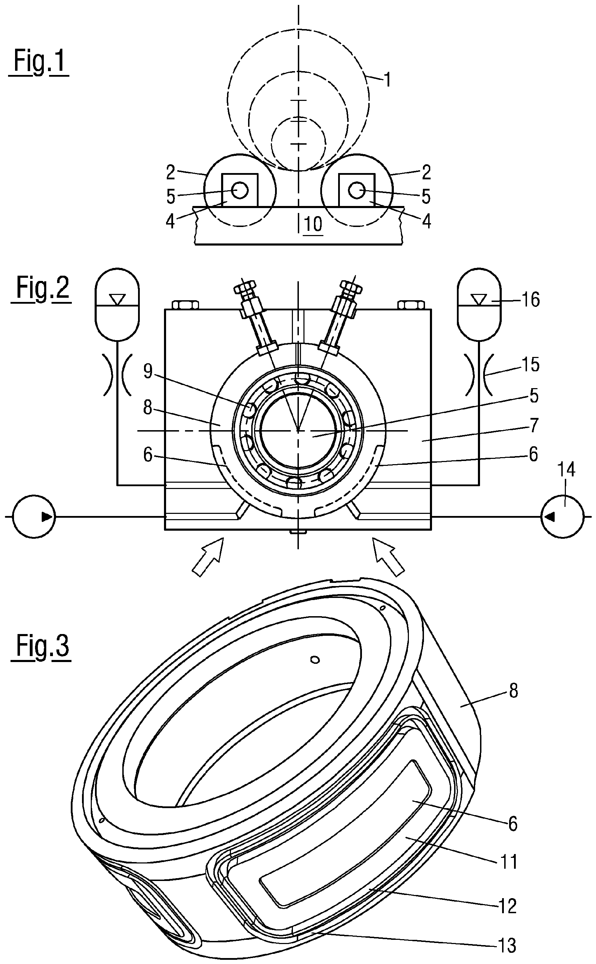

Fig. 1 zeigt stark schematisiert eine Wickelvorrichtung in Form eines Doppeltragwalzenwicklers. Die Wickelvorrichtung weist zwei Trag-Walzen 2, 3 auf, die zwischen sich ein Wickelbett bilden, in dem eine Wickelrolle 1 liegt, auf die eine nicht näher dargestellte Materialbahn aufgewickelt wird. Die Ausbildung eines derartigen Doppeltragwalzenwicklers ist an sich bekannt.

Die beiden Trag-Walzen 2, 3 sind in einem Maschinengestell 10 drehbar gelagert. Hierzu weist jede Trag-Walze 2, 3 eine Lagereinrichtung 4 mit je einem Lager 9 an jedem Ende der Trag-Walzen 2, 3 auf.

Eine derartige Wickelvorrichtung kann mit einer maximalen Zuführgeschwindigkeit von beispielsweise 2.500 m/min oder mehr betrieben werden. Dadurch ergibt sich eine bestimmte Drehzahl und damit eine bestimmte Drehfrequenz der Trag-Walzen 2, 3. Für diese Drehfrequenz ist die Wickelvorrichtung ausgelegt. Die Drehzahl der Wickelrolle 1 ist zu Beginn eines Wickelvorganges am größten, weil die Wickelrolle 1 hier ihren kleinsten Durchmesser aufweist. Am Ende des Wickelvorganges, wenn die Wickelrolle 1 ihren maximalen Durchmesser erreicht hat, rotiert die Wickelrolle 1 mit einer verminderten Drehfrequenz.

Gemäß Figur 2 umfasst die Lagereinrichtung 4 ein Lagergehäuse 7 mit dem das entsprechende zylindrische Walzenende der Trag-Walze 2,3 umschließenden WälzLager 9.

Die Schmierung des Lagers 9 erfolgt bei derartigen Maschinen üblicherweise mit Schmierfett und hier getrennt von der Versorgung der Lagertaschen 6.

Zwischen dem zylindrischen Lager 9 und dem Lagergehäuse 7 befindet sich dabei ein das Lager 9 umschließender, zylindrischer und am Lagergehäuse 7 fixierter Lagerhalter 8. Das Lagergehäuse 7 besitzt hierbei eine zylindrische Innenfläche, welche die zylindrische Außenfläche des zylinderringförmigen Lagerhalters 8 umschließt.

Dabei stützt sich der Lagerhalter 8 hier über zwei hydrostatische Lagertaschen 6 am Lagergehäuse 7 ab, welche sich auf der, der Wickelrolle 1 gegenüberliegenden Hälfte des Lagerhalters 8 befinden.

Durch diese hydrostatische Abstützung des Lagerhalters 8 und damit auch indirekt des Lagers 9 können Schwingungen wirkungsvoll gedämpft werden.

Die zwischen dem Lagergehäuse 7 und dem zylinderringförmigen Lagerhalter 8 vorhandenen Lagertaschen 6 werden dabei, wie insbesondere in Figur 3 zu erkennen, von einer Aussparung im Lagerhalter 8 gebildet.

Dementsprechend erstrecken sich die mit Hydraulikflüssigkeit, im Allgemeinen Hydrauliköl gespeisten Lagertaschen 6 senkrecht zur Walzenachse zylinderförmig gekrümmt um einen Teilabschnitt des jeweiligen Walzenendes 5 und damit auch des Lagers 9. Dies erlaubt eine sehr kompakte Konstruktion, was die Lagereinrichtung 4 für Umbauten besonders geeignet macht.

Zur Vereinfachung der Konstruktion sind die Lagertaschen 6 identisch aufgebaut. Begrenzt werden die Lagertaschen 6 von einer um diese laufenden Spaltfläche 11 des Lagerhalters 8. Über den, zwischen dem Lagergehäuse 7 und der Spaltfläche 11 des Lagerhalters 8 gebildeten Spalt, den sogenannten Flüssigkeitsspalt fließt die Hydraulikflüssigkeit aus der Lagertasche 6 in eine, die Spaltfläche 11 umgebende Rücklaufkammer 12, welche von einer Aussparung im Lagerhalter 8 gebildet wird.

Um die Rücklaufkammer 12 wiederum verläuft eine Dichtungsnut 13 im Lagerhalter 8, welche eine X-Ringdichtung aufnimmt und die Lagertasche 6 hydraulisch von der Schmierung des Lagers 9 trennt. So kann die Hydraulikflüssigkeit problemlos aus der Rücklaufkammer 12 abgeführt und wieder der Pumpe 14 zugeführt werden.

Gemäß Figur 2 werden die Lagertaschen 6 beispielhaft von einer Pumpe 14 mit einem konstanten Volumenstrom von Hydraulikflüssigkeit gespeist. Dadurch ergibt sich im statischen Fall auch immer eine annähernd konstante mittlere Höhe des Flüssigkeitsspalts, so dass der Lagerhalter 8 und damit auch das Lager 9 gegenüber dem Lagergehäuse 7 immer eine klar definierte Position hat, ohne dass eine wie immer geartete sonstige Regelung erforderlich wäre.

Zur Aufrechterhaltung des erforderlichen Drucks in der Lagertasche 6 ist diese über eine Drossel 15 mit einem Druckspeicher 16, beispielsweise einem Gasdruckspeicher verbunden.

Wenn nun die Trag-Walze 2,3 schwingt, wird auch das Lager 9 und damit der Lagerhalter 8 in entsprechende Schwingungen versetzt. Dadurch bleibt zwar der Flüssigkeitsspalt im Mittel erhalten. Die Dicke des Flüssigkeitsspalts schwankt aber mit der gleichen Frequenz, mit der auch die Trag-Walze 2,3 schwingt.

Da über die Pumpe 14 ein konstanter Volumenstrom an Hydraulikflüssigkeit zugeführt wird, kann in der Zeit, in der sich der Flüssigkeitspalt verringert und damit der Strömungswiderstand erhöht, die dann nicht über den Flüssigkeitsspalt abfließende Hydraulikflüssigkeit in dem Druckspeichers 16 aufgenommen werden. In den Zeiten, in denen sich der Flüssigkeitsspalt etwas vergrößert, wird die Hydraulikflüssigkeit dann aus dem Druckspeicher 16 wieder abgegeben.

Sowohl beim Einströmen in den Druckspeicher 16 als auch beim Herausströmen aus dem Druckspeicher 16 muss die Hydraulikflüssigkeit die Drossel 15 durchströmen. Dann wird Bewegungsenergie in Wärmeenergie umgewandelt. Dem schwingenden System wird dadurch Energie entzogen.

Da der Lagerhalter 8 gegenüber dem Lagergehäuse 7 prinzipiell unbeweglich ist, ist ein Anschlagen völlig unkritisch.

Die Drossel 15 kann einen veränderbaren Drosselwiderstand aufweisen. Man kann zur Verstellung des Drosselwiderstandes eine von außen betätigbare Stelleinrichtung verwenden, beispielsweise einen elektrischen Motor oder dergleichen.

Die beiden Lagertaschen 6 haben unterschiedliche Wirkrichtungen, wobei sich die Wirkrichtungen mit einem Winkel von 90° schneiden. Dies erlaubt die Gewährleistung optimaler Dämpfungseigenschaften für alle Durchmesser der Wickelrolle 1 und damit für alle Lastwinkel im Wickelbett.

Darüber hinaus sind alle Lagereinrichtungen 4 der Trag-Walzen 2,3 identisch ausgebildet. Da auch die Lagertaschen 6 symmetrisch zu einer durch die Achsen des Walzenendes 5 sowie der Wickelrolle 1 verlaufenden Symmetrieachse angeordnet sind, kann die Lagereinrichtung 4 sehr universell eingesetzt werden.

## Patentansprüche

1. Vorrichtung zum Aufwickeln einer Materialbahn zu einer Wickelrolle (1) mit mindestens einer Walze (2,3), an der die Wickelrolle (1) beim Wickeln anliegt und die beim Wickeln rotiert, wobei die Walze (2,3) in einer Lagereinrichtung (4) mit einem Lager (9) an jedem Walzenende (5) gelagert ist und das Lager (9) eine hydrostatische Abstützung mit mindestens einer Lagertasche (6) aufweist, die mit Hydraulikflüssigkeit gespeist ist, **dadurch gekennzeichnet,**
**dass** sich die Lagertasche (6) senkrecht zur Walzenachse gekrümmt um einen Abschnitt des jeweiligen Walzenendes (5) erstreckt und die Lagereinrichtung zwei Lagertaschen (6) besitzt, deren Wirkrichtungen sich mit einem Winkel zwischen 60 und 130° schneiden.

2. Vorrichtung nach Anspruch 1, **dadurch gekennzeichnet, dass** die Lagereinrichtung zwei Lagertaschen (6) besitzt, deren Wirkrichtungen sich mit einem Winkel von ca. 90° schneiden.

3. Vorrichtung nach einem der Ansprüche 1 oder 2,
**dadurch gekennzeichnet,**
**dass** die Lagertaschen (6) identisch aufgebaut sind.

4. Vorrichtung nach einem der Ansprüche 1 bis 3,
**dadurch gekennzeichnet,**
**dass** die Lagertaschen (6) symmetrisch zu einer durch das Walzenende (5) verlaufenden Symmetrieachse angeordnet sind.

5. Vorrichtung nach einem der vorherigen Ansprüche,
**dadurch gekennzeichnet,**
**dass** die Lagertasche (6) zwischen dem Lagergehäuse (7) der Lagereinrichtung (4) und einem, das Lager (9) umschließenden zylinderringförmigen, vorzugsweise feststehenden Lagerhalter (8) angeordnet ist.

6. Vorrichtung nach Anspruch 5,
**dadurch gekennzeichnet,**
**dass** das Lagergehäuse (7) eine zylindrische Innenfläche besitzt, welche eine zylindrische Außenfläche des zylinderringförmigen Lagerhalters (8) umschließt.

7. Vorrichtung nach Anspruch 5 oder 6,
**dadurch gekennzeichnet,**
**dass** die Lagertasche (6) von einer Aussparung im ringförmigen Lagerhalter (8) gebildet wird.

8. Vorrichtung nach einem der vorherigen Ansprüche,
**dadurch gekennzeichnet,**
**dass** die die Lagertasche (6) mit einem konstanten Volumenstrom von Hydraulikflüssigkeit gespeist ist.

9. Vorrichtung nach einem der Ansprüche 1 bis 7,
**dadurch gekennzeichnet,**
**dass** die Lagertasche (6) über eine Drossel mit einem konstanten Vordruck in Verbindung steht.

10. Vorrichtung nach einem der Ansprüche 1 bis 7
**dadurch gekennzeichnet,**
**dass** die Lagertasche (6) über eine Drossel mit einem Druckspeicher in Verbindung steht.

11. Vorrichtung nach einem der vorhergehenden Ansprüche
**dadurch gekennzeichnet,**
**dass** Zu- und Abführung der Hydraulikflüssigkeit der Lagertasche (6) getrennt von der Lagerschmierung sind.

12. Vorrichtung nach einem der vorhergehenden Ansprüche, **dadurch gekennzeichnet, dass** alle Lagereinrichtungen (4) der Walzen (2,3) identisch ausgebildet sind.

## Claims

1. Device for winding a web of material into a wound roll (1), having at least one roller (2, 3) against which the wound roll (1) bears during winding and which rotates during winding, the roller (2, 3) being mounted in a bearing device (4) having a bearing (9) at each roller end (5), and the bearing (9) having a hydrostatic support with at least one bearing pocket (6) which is fed with hydraulic fluid, **characterized in that**
the bearing pocket (6) extends perpendicularly to the roll axis in a curved manner around a section of the respective roller end (5), and the bearing device has two bearing pockets (6) whose directions of action intersect at an angle of between 60 and 130°.

2. Device according to claim 1, **characterized in that** the bearing device has two bearing pockets (6) whose directions of action intersect at an angle of approx. 90°.

3. Device according to one of claims 1 or 2,
**characterized in that**
the bearing pockets (6) are of identical construction.

4. Device according to any one of claims 1 to 3,
**characterized in that**
the bearing pockets (6) are arranged symmetrically with respect to an axis of symmetry running through the roller end (5).

5. Device according to any of the previous claims,
**characterized in that**
the bearing pocket (6) is arranged between the bearing housing (7) of the bearing device (4) and a cylindrical ring-shaped, preferably fixed bearing holder (8) enclosing the bearing (9).

6. Device according to claim 5,
**characterized in that**
the bearing housing (7) has a cylindrical inner surface which encloses a cylindrical outer surface of the cylindrical ring-shaped bearing holder (8).

7. Device according to claim 5 or 6,
**characterized in that**
the bearing pocket (6) is formed by a recess in the annular bearing holder (8).

8. Device according to any of the previous claims,
**characterized in that**
the bearing pocket (6) is fed with a constant volume flow of hydraulic fluid.

9. Device according to any one of claims 1 to 7,
**characterized in that**
the bearing pocket (6) is connected to a constant upstream pressure via a throttle.

10. Device according to any one of claims 1 to 7
**characterized in that**
the bearing pocket (6) is connected to a pressure accumulator via a throttle.

11. Device according to any of the preceding claims,
**characterized in that**
the supply and discharge of the hydraulic fluid of the bearing pocket (6) are separate from the bearing lubrication.

12. Device according to one of the preceding claims, **characterized in that** all bearing devices (4) of the rollers (2, 3) are of identical design.

## Revendications

1. Dispositif pour enrouler une bande de matériau en un rouleau d'enroulement (1) avec au moins un cylindre (2, 3) contre lequel le rouleau d'enroulement (1) s'appuie lors de l'enroulement et qui tourne lors de l'enroulement, le cylindre (2, 3) étant logé dans un dispositif de palier (4) avec un palier (9) à chaque extrémité de cylindre (5) et le palier (9) présentant un support hydrostatique avec au moins une poche de palier (6) qui est alimentée en liquide hydraulique, **caractérisé en ce que**
la poche de palier (6) s'étend perpendiculairement à l'axe du cylindre en étant courbée autour d'une section de l'extrémité respective du cylindre (5) et le dispositif de palier possède deux poches de palier (6) dont les directions d'action se coupent avec un angle compris entre 60 et 130°.

2. Dispositif selon la revendication 1, **caractérisé en ce que** le dispositif de palier possède deux poches de palier (6) dont les directions d'action se coupent avec un angle d'environ 90°.

3. Dispositif selon l'une des revendications 1 ou 2,
**caractérisé en ce que**
les poches de palier (6) sont construites de manière identique.

4. Dispositif selon l'une des revendications 1 à 3,
**caractérisé en ce que**
les poches de palier (6) sont disposées symétriquement par rapport à un axe de symétrie passant par l'extrémité de cylindre (5).

5. Dispositif selon l'une des revendications précédentes,
**caractérisé en ce que**
la poche de palier (6) est disposée entre le logement de palier (7) du dispositif de palier (4) et un support de palier (8) en forme d'anneau cylindrique, de préférence fixe, entourant le palier (9).

6. Dispositif selon la revendication 5,
**caractérisé en ce que**
le logement de palier (7) possède une surface intérieure cylindrique qui entoure une surface extérieure cylindrique du support de palier (8) en forme d'anneau cylindrique.

7. Dispositif selon la revendication 5 ou 6,
**caractérisé en ce que**
la poche de palier (6) est formée par un évidement dans le support de palier annulaire (8).

8. Dispositif selon l'une des revendications précédentes,
**caractérisé en ce que**
la poche de palier (6) est alimentée par un débit volumique constant de liquide hydraulique.

9. Dispositif selon l'une des revendications 1 à 7,
**caractérisé en ce que**
la poche de palier (6) est en liaison avec une pression d'admission constante par l'intermédiaire d'un étranglement.

10. Dispositif selon l'une des revendications 1 à 7,
**caractérisé en ce que**
la poche de palier (6) est en liaison avec un accumulateur de pression par l'intermédiaire d'un étranglement.

11. Dispositif selon l'une des revendications précédentes,
**caractérisé en ce que**
l'arrivée et l'évacuation du liquide hydraulique de la poche de palier (6) sont séparées de la lubrification du palier.

12. Dispositif selon l'une des revendications précédentes, **caractérisé en ce que** tous les dispositifs de palier (4) des cylindres (2, 3) sont identiques.
